# EUROPEAN PATENT SPECIFICATION

(11) **EP 2 343 149 B1**
(45) Date of publication and mention of the grant of the patent: **23.07.2014**
(21) Application number: 10015579.5
(22) Date of filing: 13.12.2010
(51) Int. Cl.: B23K 35/02, B23K 35/30, B23K 35/362, B23K 35/38, C22C 19/05, B23K 35/368

(54) **Flux-cored nickel-based alloy wire**
Flusskerndraht mit nickelbasierter Legierung
Fil d'alliage à base de nickel à flux incorporé

(30) Priority: 09.01.2010 JP 2010003440
(43) Date of publication of application: 13.07.2011
(73) Proprietor: Kabushiki Kaisha Kobe Seiko Sho, Hyogo 651-8585 (JP)
(72) Inventor: Kawamoto, Hiroaki, Fujisawa-shi Kanagawa 251-0014 (JP); Ikeda, Tetsunao, Fujisawa-shi Kanagawa 251-0014 (JP); Watanabe, Hirohisa, Fujisawa-shi Kanagawa 251-0014 (JP)
(74) Representative: Müller-Boré & Partner Patentanwälte PartG mbB

(56) References cited:
- WO-A1-2010/013565
- JP-A- 2000 343 277
- JP-A- 2007 203 350
- JP-A- 2008 246 507

## Description

The present invention relate's to flux-cored nickel-based alloy wires used in gas-shielded arc welding typically of nuclear reactors and pressure vessels. Specifically, the present invention relates to flux-cored nickel-based alloy wires which are adopted to gas-shielded arc welding typically of nickel-based alloys, incoloy alloys containing 30 to 40 percent by mass of Ni, steels for low temperature service containing 10 percent by mass or less of nickel (Ni), and super stainless steels. Theflux-corednickel-basedalloy wires excel in weldability such as slag removability while suppressing spatter generation and give weld metals (weld beads) showing good pitting resistance and bead appearance and having satisfactory resistance to hot cracking.

Gas-shielded arc welding using flux-cored wires excels in working efficiency as compared to shielded metal arc welding and tungsten-inert-gas (TIG) welding, and its adaptation range grows year by year. Accordingly, strong demands have been made to develop and improve flux-cored wires adopted also to gas-shielded arc welding typically of nickel-based alloys, incoloy alloys containing 30 to 40 percent by mass of Ni, 9% nickel steels and other steels for low temperature service, and super stainless steels. Such widely-applicable flux-cored wires should be designed while giving consideration to weldability and weld metal properties such as resistance to cracking in sufficient consideration to the uses of the flux-cored wires.

Various investigations have been made in gas-shielded arc welding using flux-cored wires, to improve weldability and resistance to hot cracking. Typically, JP-A No. H06 (1994)-198488 discloses that a flux having specific contents of TiO₂, SiO₂ and ZrO₂ as slag-forming materials allows the resulting weld bead to have better mechanical properties such as ductility, toughness, and resistance to hot cracking and to show better weldability.

JP-A No. 2000-343277 discloses that a flux-cored nickel-based alloy wire further containing an iron oxide and a manganese oxide can give a weld metal containing a less amount of Si and showing better resistance to hot cracking.

The techniques disclosed in the two patent literatures are intended to improve the resistance to hot cracking but disadvantageously cause welding defects, such as pits, of the weld beads. The present inventors have proposed in JP-A No . 2008-246507 a technique for improving pitting resistance by specifying the contents of TiO₂, SiO₂ and ZrO₂ as slag-forming materials, the total content of these slag-forming materials, and the MnO₂ content. This technique is intended to prevent welding defects such as pits which are generated when the techniques disclosed in these patent literatures are adopted.

The above-mentioned known techniques, however, have the following disadvantages. The flux-cored nickel-based alloy wire disclosed in JP-A No. H06 (1994)-198488 often suffers from welding defects, such as pits, on surfaces of beads in horizontal fillet welding and horizontal welding, in which a molten metal solidifies at a higher rate than that in flat welding- In addition, the wire may suffer from degraded arc stability during welding operation, or may suffer from degraded weldability in vertical upward welding in which the molten metal solidifies at a lower rate.

JP-A No. 2000-343277 discloses the technique for improving the resistance to hot cracking by adding iron oxides and manganese oxides and thereby reducing the Si content in the weld metal, as described above. In some compositions, however, this technique may fail to control the Si content in the weld metal and may cause degraded resistance to hot cracking, because the iron oxides and manganese oxides are added to a flux in which the contents of TiO₂, SiO₂, ZrO₂, Al₂O₃, CaO, Na₂O and K₂O are specified only with respect to the total amount of them.

As is described above, the present inventors have proposed in JP-A No. 2008-246507 a technique for improving resistance to pits which are generated when the known techniques are adopted, by specifying the respective contents and total content of TiO₂, SiO₂ and ZrO₂ as slag-forming materials as well as specifying the MnO₂ content. Even this technique, however, may suffer from degraded arc stability during welding or may suffer from poor resistance to hot cracking in some compositions.

The present invention has been made under these circumstances, and an object of the present invention is to provide a flux-cored nickel-based alloy wire which excels in weldability in welding of all positions performed typically on 9% nickel steels and nickel-based alloy steels and which can give a weld metal showing good pitting resistance and bead appearance and having satisfactory resistance to hot cracking.

Specifically, the present inventionprovides, in an embodiment, a flux-cored nickel-based alloywire which includes a sheath composed of a nickel-based alloy; and a flux filled in the sheath, in which the sheath contains nickel (Ni) in a content of 50.0 percent by mass or more, the flux contains, based on the total mass of the wire, TiO₂ in a content of 3 to 11 percent by mass; SiO₂ in a content of 0.2 to 1.3 percent by mass; ZrO₂ in a content of 1 to 3 percent by mass; one or more manganese oxides in a content in terms of MnO₂ of 0.3 to 1.0 percent by mass; and one or more compounds selected from the group consisting of sodium (Na) compounds, potassium (K) compounds, and (Li) lithium compounds in a total content in terms of Na, K, and Li, respectively, of 0.2 to 1.0 percent by mass, and the flux has a ratio of the total of the TiO₂ and ZrO₂ contents to the SiO₂ content ( ( [TiO₂] + [ZrO₂] ) / [SiO₂] ) of 7.0 to 14.5, where [TiO₂] , [SiO₂] and [ZrO₂] represent the Ti0₂, SiO₂ and ZrO₂ contents, respectively.

In the flux-cored nickel-based alloy wire according to the present invention, it is preferred that the sheath has controlled contents of carbon (C), silicon (Si), manganese (Mn), phosphorus (P), sulfur (S), copper (Cu), vanadium (v) and cobalt (Co) so as to have, based on the total mass of the sheath, a C content of 0.02 percent by mass or less, a Si content of 0.08 percent by mass or less, a Mn content of 1.0 percent by mass or less, a P content of 0.04 percent by mass or less, a S content of 0.03 percent by mass or less, a Cu content of 0.50 percent by mass or less, a V content of 0.35 percent by mass or less, and a Co content of 2.5 percent by mass or less, and the sheath contains, based on the total mass of the sheath, chromium (Cr) in a content of 14.5 to 16.5 percent by mass, molybdenum (Mo) in a content of 15.0 to 17.0 percent by mass, iron (Fe) in a content of 4.0 to 7.0 percent by mass, and tungsten (W) in a content of 3.0 to 4.5 percent by mass.

In the flux-cored nickel-based alloy wire according to the present invention, the sheath preferably occupies 70 to 80 percent by mass of the total mass of the wire.

In the flux-cored nickel-based alloy wire according to the present invention, the flux contains TiO₂, SiO₂, ZrO₂, manganese oxides, and one or more of sodium compounds, potassium compounds and lithium compounds within appropriate ranges, and the flux has a ratio of the total of the TiO₂ and ZrO₂ contents to the SiO₂ content within a specific appropriate range. This allows excellent weldability in welding of all positions and gives a weld metal showing good pitting resistance and bead appearance and having satisfactory resistance to hot cracking.
Figs. 1A, 1B, 1C, and 1D are cross-sectional views of flux-cored wires;
Fig. 2 is a cross-sectional view of a specimen used in working examples; and
Fig. 3 is a view showing how to analyze the total components of a weld metal used in the working examples.

The present inventors made investigations on the composition of flux components and have developed the flux composition according to the present invention, so as to improve the resistance to hot cracking and the weldability. The present inventors proposed the technique disclosed in JP-A No. 2008-246507 in order to solve the problems of degraded arc stability and weldability in some welding positions. These problems occur when the flux-cored nickel-based alloy wires according to the known techniques are adopted. However, even the proposed technique may suffer from degraded arc stability during welding or may suffer from degraded resistance to hot cracking in some compositions. A weld metal composed of a nickel-based alloy solidifies as a single layer of austenite (y) and is thereby inherently susceptible to solidification cracking. Inparticular, of chemical composition of weld metal, P, S, and Si components have low solid-liquid distribution coefficients in the nickel-based alloy, thereby form eutectic mixtures having low melting points (e.g., in the case of silicon compounds, they form Ni-Ni₃Si and Ni-Nb-Si eutectic mixtures), and significantly cause the resulting nickel-based alloy weld metal to have higher susceptibility to solidification cracking. The present inventors made intensive experiments and investigations in order to solve the problems of the known flux-cored nickel-based alloy wires which suffer from degraded resistance to hot cracking, or suffer from degraded arc stability in some compositions of the flux-cored wires, or suffer from poor weldability in some welding positions. As a result, the present inventors have found that a weld metal of a nickel-based alloy can be suppressed from containing remained silicon and can thereby be prevented from degradation in resistance to hot cracking, by specifying the SiO₂ content of the flux, appropriately specifying the ratio between the SiO₂ content as a slag-forming material and the total amount of TiO₂ and ZrO₂ as other slag-forming materials, and appropriately adding one or more manganese oxides within an appropriate range. The present inventors have further found that, in addition to the above conditions, the addition of an appropriate amount of sodium compounds, potassium compounds, and lithium compounds prevents degradation in arc stability during welding and degradation in weldability in some welding positions.

The flux-cored nickel-based alloy wire according to the present invention preferably has a composition of the sheath and a ratio of the sheath occupying in the entire wire within the following ranges. Specifically, the composition of the sheath is preferably specified as follows, as a precondition for the weld metal to have a component composition that meets the composition prescribed in American Welding Society (AWS) Standards Class A5.34 ENiCrMo4Tx-y. The sheath preferably has controlled contents of C, Si, Mn, P, S, Cu, V and Co so as to have, based on the total mass of the sheath, a C content of 0.02 percent by mass or less, a Si content of 0.08 percent by mass or less, a Mn content of 1.0 percent by mass or less, a P content of 0.04 percent by mass or less, a S content of 0.03 percent by mass or less, a Cu content of 0.50 percent by mass or less, a V content of 0.35 percent by mass or less, and a Co content of 2.5 percent by mass or less, and the sheath preferably contains, based on the total mass of the sheath, Cr in a content of 14.5 to 16.5 percent by mass, Mo in a content of 15.0 to 17.0 percent by mass, Fe in a content of 4.0 to 7.0 percent by mass, and W in a content of 3.0 to 4.5 percent by mass - This composition falls within the range of components prescribed in AWS A5.14 ERNiCrMo4. Thus, by using a sheath having such composition falling within the range of components prescribed in AWS A5.14 ERNiCrMo4 to give a weld metal having a composition that meets the requirements in AWS A5.34 ENiCrMo4Tx-y, the resulting weldmetal exhibits excellent resistance to hot cracking and superior pitting resistance. The flux-cored nickel-based alloy wire according to the present invention preferably has a sheath ratio (a ratio of the sheath mass to the total mass of the flux-cored wire) of 70 to 80 percent by mass. In a flux-cored wire having such a high sheath ratio, the composition of the sheath affects the composition of the weld metal.

The flux-cored nickel-based alloywire according to the present invention is advantageously used typically for butt welding using, as base metals, nickel-based alloys, incoloy alloys containing 30 to 40 percent by mass of Ni, 9% nickel steels and other steels for low temperature service, and super stainless steels; and build-up welding using, as base metals, clad steels, low-alloy steels, low-alloy heat-resistant steels, and stainless steels.

Reasons for specifying numerical values relating to the flux-cored nickel-based alloy wire will be described below.

"TiO₂ content in the flux [TiO₂] : 3 to 11 percent by mass based on the total mass of the wire"

Titanium dioxide (TiO₂) forms a uniform slag covering and improves the arc stability. Therefore, TiO₂ is thereby added as a main component of slag-forming materials. Exemplary TiO₂ sources usable herein include rutile, leucoxene, potassium titanate, sodium titanate, and calcium titanate. TiO₂, if its content in the flux is less than 3 percent by mass based on the total mass of the wire, may not sufficiently exhibit the activities as the slag-forming material. In contrast, TiO₂, if its content in the flux is more than 11 percent by mass based on the total mass of the wire, is present as a slag-forming material in an excessive amount in the wire and thereby causes excessive generation of the slag during welding. This causes the slag to drip from the weld bead to often cause slag inclusion of the weld bead and to cause degraded pitting resistance. Accordingly, the TiO₂ content in the flux is herein specified to be 3 to 11 percent by mass based on the total mass of the wire. A more preferred lower limit of the TiO₂ content is 5 percent by mass, and a more preferred upper limit thereof is 8 percent by mass.

"SiO₂ content in the flux [SiO₂] : 0.2 to 1.3 percent by mass based on the total mass of the wire"

Silicon dioxide (SiO₂) is added as a slag-forming material to increase the viscosity of the slag and to give a good bead shape. Exemplary raw materials for SiO₂ usable herein include silica sand, potassium feldspar, wollastonite, sodium silicate, and potassium silicate. SiO₂, if its content in the flux is less than 0.2 percent by mass based on the total mass of the wire, may not sufficiently exhibit the activities as the slag-forming material. In contrast, SiO₂, if its content in the flux is more than 1.3 percent by mass based on the total mass of the wire, may cause degraded slag removability. Additionally, SiO₂, if added in an excessive amount, may cause the weld bead to have an excessively high Si content to thereby often have degraded resistance to hot cracking, because SiO₂ is susceptible to reduction by a strongly deoxidizing element such as Ti. Accordingly, the SiO₂ content in the flux is specified to be 0.2 to 1.3 percent by mass based on the total mass of the wire. A more preferred lower limit of the SiO₂ content is 0.6 percent by mass, and a more preferred upper limit thereof is 1.2 percent by mass.

"ZrO₂ content in the flux [ZrO₂] : 1 to 3 percent by mass based on the total mass of the wire"

Zirconium dioxide (ZrO₂) helps the arc to be blown more satisfactorily and to be more stable even at low welding currents. This component also accelerates the solidification of the slag and thereby improves the weldability in vertical upward welding. Exemplary ZrO₂ sources usable herein include zirconsand and zirconia. ZrO₂, if its content in the flux is less than 1 percent by mass based on the total mass of the wire, may not sufficiently effectively improve the arc stability and weldability. In contrast, ZrO₂, if its content in the flux is more than 3 percent by mass based on the total mass of the wire, may cause the slag to start to solidify at a higher temperature and to solidify more slowly, and this may prevent a gas, which is generated from the weld metal during solidification, from escaping via the slag during solidification and may thereby increase the number of pits generated in the weld bead. Accordingly, the ZrO₂ content herein is specified to be 1 to 3 percent by mass based on the total mass of the wire.

"Manganese oxide content (in terms of MnO₂) in the flux: 0.3 to 1.0 percent by mass based on the total mass of the wire"

At temperatures in the range of 0°C to 2400°C, silicon oxides have a standard free energy of formation lower than that of manganese oxides and can react more stably than manganese oxides do. Specifically, the addition of MnO₂ to the flux accelerates the reactions of MnO_{2―}Mn+O₂ and Si+O₂→SiO₂ in the molten metal, and SiO₂ after the reaction rises to the surface as a slag. Accordingly, MnO₂ impedes SiO₂ from being reduced into Si and from remaining as elementary Si in the weld metal. In addition, MnO₂ has a low melting point of 550°C, and the addition of MnO₂ to the flux allows the molten slag to start to solidify at a lower temperature, and this prevents the gas, which is generated from the weldmetal during solidification, from remaining in the weldbead and thereby prevents the pit generation. Manganese oxides, if its content in the flux is less than 0.3 percent by mass based on the total mass of the wire, may not sufficiently exhibit the effects of preventing Si remaining in the weld metal and of preventing pit generation and may cause degraded resistance to hot cracking. In contrast, manganese oxides, if its content in the flux is more than 1.0 percent by mass based on the total mass of the wire, may cause the slag to easily penetrate (fuse with) the bead surface to thereby impair slag removability and may cause the molten slag to solidify at a lower temperature, thus impairing the workability in vertical upward welding. Accordingly, the manganese oxide content in the flux is specified herein to be 0.3 to 1. 0 percent by mass based on the total mass of the wire. A more preferred lower limit of the manganese oxide content is 0.4 percent by mass, and a more preferred upper limit thereof is 0.9 percent by mass.

It should be noted that the term "manganese oxides" means and includes oxidized manganese (also including other manganese oxides than MnO₂) but does not include elementary manganese (manganese alloys). The amounts of the other manganese oxides than MnO₂ are converted into the mass of MnO₂ containing the same amount of manganese and added to the "manganese oxide content".

"Sodium compounds, potassium compounds, and lithium compounds in the flux: in a total content of these compounds in terms of Na, K and Li of 0.2 to 1.0 percent by mass based on the total mass of the wire"

Sodium (Na), potassium (K), and lithium (Li) in the flux act as arc stabilizers and suppress spatter generation. In the present invention, Na, K, and Li are added as sodium compounds, potassium compounds, and lithium compounds, respectively. Specific examples of such compounds usable herein include LiF, NaF, KF, Na₃AlF₆, K₂SiF₆, K₂TiF₆, albite, and potash feldspar. Sodium compounds, potassium compounds, and lithium compounds, if in a total content in the flux in terms of Na, K, and Li, respectively, of less than 0.2 percent by mass based on the total mass of the wire, may not sufficiently exhibit their activities as arc stabilizers and may cause degraded pitting resistance. In contrast, sodium compounds, potassium compounds, and lithium compounds, if contained in the flux in a total content of more than 1.0 percent by mass, may cause increased spatter generation contrarily. Accordingly, the total content of sodium compounds, potassium compounds, and lithium compounds in the flux in terms of Na, K and Li is specified to be 0.2 to 1.0 percent by mass based on the total mass of the wire. A more preferred upper limit of the total content of these compounds is 0.7 percent by mass.

"Ratio of the total of the TiO₂ and ZrO₂ contents to the SiO₂ content in the flux ( ( [TiO₂] + [ZrO_{2]} ) / [SiO₂] ) : 7.0 to 14.5"

SiO₂ allows the slag to have a higher viscosity and allows the weld bead to show a. better shape, as described above. However, if the ratio of the total of the TiO₂ and ZrO₂ contents to the SiO₂ content is more than 14.5, the slag may have degraded flowability and may be formed unevenly, and this may often cause slag inclusion and degraded wettability of the bead. Additionally, such a high ratio may cause the slag to start to solidify at a higher temperature and to solidify more slowly, and this may impede the discharge out of a gas, which has been generated from the weld metal during solidification, via the slag during solidification and thereby increase the number of pits generated in the weld bead. In contrast, if the ratio of the total of the TiO₂ and ZrO₂ contents to the SiO₂ content is less than 7.0, the slag is liable to attach (fuse with) the bead and shows inferior slag removability. Accordingly, the ratio of the total of the TiO₂ and ZrO₂ contents to the SiO₂ content ( ( [TiO₂] + [ZrO_{2]} ) / [SiO₂] ) herein is specified to be 7.0 to 14.5. The ratio of the total of the TiO₂ and ZrO₂ contents to the SiO₂ content is more preferably 7.0 to 14.0.

The flux-cored nickel-based alloy wire according to the present invention may further contain, in addition to the above-mentioned components, carbonates, CaF₂ and other basic materials. The addition of carbonates, CaF₂ and other basic materials, however, may often cause degraded arc stability and increased spatter generation, thus often causing degraded weldability. Accordingly, these carbonates, CaF₂ and other basic materials can be added in an amount of 0.1 percent by mass or less based on the total mass of the wire.

### Examples

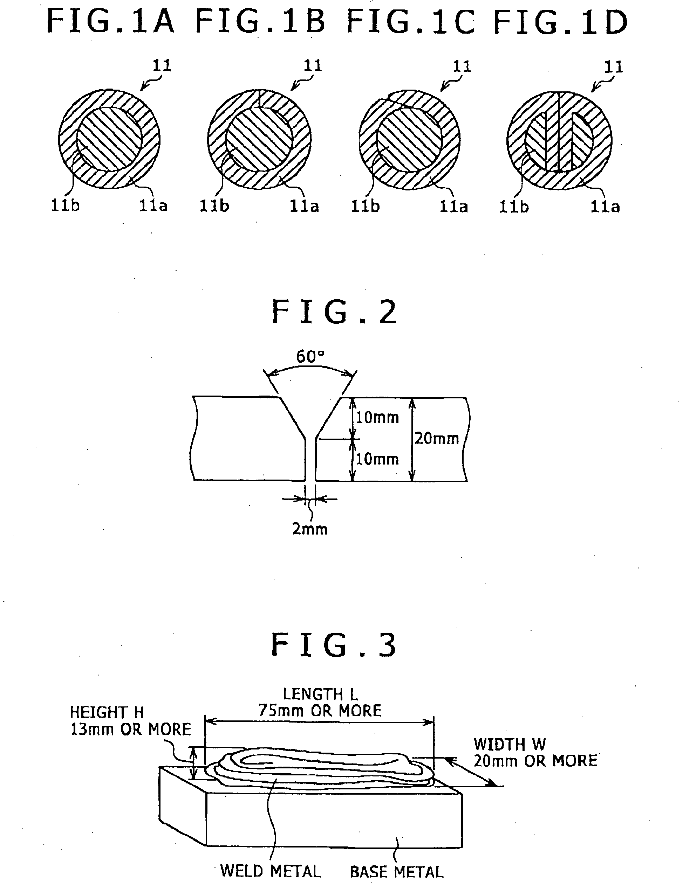

The present invention will be illustrated in further detail with reference to several working examples demonstrating advantageous effects of the flux-cored nickel-based alloy wire according to the embodiment of the present invention in comparison with comparative examples thereof. Initially, a series of cylindrical sheathes 11a (Types A to C) as illustrated in Figs. 1A to 1D was prepared by bending each of hoops composed of nickel-based alloys having the compositions in Table 1 and having a thickness of 0.4 mm and a width of 9.0 mm. Each of fluxes 11b was filled in each of these sheathes to form a series of flux-cored wires 11 (Nos. 1 to 29). The flux contained metal materials and slag components (slag-forming materials). The compositions of these fluxes are shown in Tables 2-1, 2-2, and 2-3 below. The flux compositions given in Tables 2-1, 2-2, and 2-3 are all contents based on the total mass of the flux-cored wire. These wires 11 were drawn to a diameter of 1.2 mm and thereby yielded tested wires (specimens).

**TABLE 1**

| Sheath type | Sheath composition (percent by mass) | | | | | | | | | | | |
|---|---|---|---|---|---|---|---|---|---|---|---|---|
| | C | Si | Mn | P | S | Mo | Cr | Fe | W | Nb | Ti | Ni and inevitable impurities |
| A | 0.006 | 0.12 | 0.48 | 0.004 | 0.0005 | 16.0 | 15.5 | 5.4 | 3.6 | 0 | 0 | remainder |
| B | 0.021 | 0.10 | 0.10 | 0.003 | 0.0005 | 8.9 | 21.8 | 3.2 | 0 | 3.4 | 0.3 | remainder |
| C | 0.006 | 0.06 | 0.47 | 0.004 | 0.0005 | 15.9 | 15.6 | 5.3 | 3.6 | 0 | 0 | remainder |

**TABLE 2-1**

| | Wire number | Sheath (type Table 1) in | Flux filling rate (percent by mass) | Oxide components in flux (percent by mass based on the total mass of wire) | | | | |
|---|---|---|---|---|---|---|---|---|
| | | | | TiO₂ | SIO₂ | ZrO₂ | Manganese oxides (in terms of MnO₂) | ([TiO₂] + [ZrO₂]) /[SiO₂] |
| Examples | 1 | C | 23 | 6.5 | 0.8 | 2.1 | 0.6 | 10.8 |
| | 2 | C | 24 | 6.5 | 0.9 | 21 | 0.6 | 9.6 |
| | 3 | C | 21 | 7.1 | 0.9 | 1.4 | 0.5 | 9.4 |
| | 4 | C | 25 | 6.0 | 1.1 | 2.2 | 0.4 | 7.5 |
| | 5 | C | 25 | 5.7 | 1.1 | 2.5 | 0.6 | 7.5 |
| | 6 | A | 24 | 6.8 | 0.8 | 1.7 | 0.9 | 10.6 |
| | 7 | A | 25 | 7.0 | 0.7 | 24 | 0.9 | 13.4 |
| | 8 | A | 26 | 7.3 | 0.9 | 2.3 | 1.0 | 10.7 |
| | 9 | A | 21 | 5.9 | 0.7 | 1.9 | 0.3 | 11.1 |
| | 10 | 8 | 23 | 6.5 | 0.8 | 2.1 | 0.6 | 10.8 |
| | 11 | B | 25 | 7.0 | 0.7 | 2.0 | 0.6 | 12.9 |
| | 12 | 8 | 21 | 7.1 | 0.9 | 1.4 | 0.9 | 9.4 |
| | 13 | B | 26 | 6.4 | 1.3 | 2.8 | 1.0 | 7.1 |
| | 14 | B | 21 | 8.0 | 0.7 | 1.1 | 0.4 | 13.0 |
| | 15 | B | 22 | 6.5 | 0.8 | 2.1 | 0.9 | 10.8 |
| Comparative Examples | 16 | A | 23 | 7.0 | 1.4 | 1.2 | 0.6 | 5.9 |
| | 17 | A | 24 | 7.0 | 0.1 | 25 | 0.6 | 95.0 |
| | 18 | A | 21 | 8.0 | 0.9 | 0.5 | 0.5 | 9.4 |
| | 19 | A | 25 | 5.1 | 1.2 | 3.2 | 0.4 | 6.9 |
| | 20 | A | 25 | 2.0 | 0.6 | 2.5 | 0.6 | 7.5 |
| | 21 | A | 24 | 12.0 | 1.2 | 1.7 | 0.9 | 11.4 |
| | 22 | A | 25 | 7.0 | 0.7 | 24 | 0.2 | 13.4 |
| | 23 | A | 26 | 7.3 | 0.9 | 23 | 1.5 | 10.7 |
| | 24 | A | 21 | 4.0 | 1.3 | 1.9 | 0.3 | 4.5 |
| | 25 | A | 26 | 7.9 | 0.6 | 2.1 | 0.6 | 16.7 |
| | 26 | B | 25 | 7.0 | 0.7 | 2.0 | 0.6 | 12.9 |
| | 27 | B | 21 | 7.1 | 0,9 | 1,4 | 0.9 | 9.4 |
| | 28 | B | 23 | 5.4 | 0.7 | 22 | 0 | 10.9 |
| | 29 | 8 | 23 | 5.4 | 1.3 | 2.2 | 0 | 5.8 |

**TABLE 2-2**

| | Wire number | Fluoride components in flux (percent by mass based on the total mass of wire) | | | | | Na, K and U compounds (n terms of Na, K, and Li) (percent by mass based on the total mass of wire) |
|---|---|---|---|---|---|---|---|
| | | K₂SiF₀ | K₂TiF₈ | NaF | LiF | CaF₂ | |
| Examples | 1 | 0.3 | 0 | 0.3 | 0.1 | 0 | 0.3 |
| | 2 | 0.3 | 0 | 0.3 | 0.1 | 0 | 0.3 |
| | 3 | 0.2 | 0 | 0.3 | 0.1 | 0 | 0.3 |
| | 4 | 0.3 | 0 | 0.3 | 0.1 | 0 | 0.3 |
| | 5 | 0.4 | 0 | 0.3 | 0.1 | 0 | 0.3 |
| | 6 | 0.4 | 0 | 0.3 | 0.1 | 0 | 0.3 |
| | 7 | 0.3 | 0 | 0.4 | 0.1 | 0 | 0.4 |
| | 8 | 0.3 | 0 | 0.3 | 0.1 | 0 | 0.3 |
| | 9 | 0.3 | 0 | 0.3 | 0.1 | 0 | 0.3 |
| | 10 | 0.3 | 0 | 0.3 | 0.1 | 0 | 0.3 |
| | 11 | 0.3 | 0 | 0.3 | 0.1 | 0 | 0.3 |
| | 12 | 0.3 | 0 | 0.4 | 0.1 | 0 | 0.4 |
| | 13 | 0.2 | 0 | 0.3 | 0.1 | 0 | 0.3 |
| | 14 | 0.3 | 0 | 0.3 | 0.1 | 0 | 0.3 |
| | 15 | 0.3 | 0 | 0.4 | 0.1 | 0 | 0.4 |
| Comparative Examples | 16 | 0.3 | 0 | 0.3 | 0.1 | 0 | 0.3 |
| | 17 | 0.2 | 0 | 0.3 | 0.1 | 0 | 0.3 |
| | 18 | 0.3 | 0 | 0.9 | 0.7 | 0 | 0.8 |
| | 19 | 0.3 | 0 | 0.3 | 0,1 | 0 | 0.3 |
| | 20 | 0.4 | 0 | 0.3 | 0.1 | 0 | 0.3 |
| | 21 | 0.6 | 0 | 0.6 | 0.8 | 0 | 0.8 |
| | 22 | 0.3 | 0 | 0.3 | 0.1 | 0 | 0.3 |
| | 23 | 0.9 | 0 | 0.5 | 0.9 | 0 | 0.8 |
| | 24 | 0.5 | 0 | 0.3 | 0.1 | 0 | 0.4 |
| | 25 | 0.3 | 0 | 0.3 | 0.1 | 0 | 0.3 |
| | 26 | 0.3 | 0 | 0 | 0 | 0 | 0.1 |
| | 27 | 0.7 | 0.5 | 0.9 | 0.6 | 0 | 1.1 |
| | 28 | 0.3 | 0 | 0.3 | 0.1 | 0 | 0.3 |
| | 29 | 0.3 | 0 | 0.3 | 0.1 | 0 | 0.3 |

**TABLE 2-3**

| | Wire number | Carbonates components in flux (percent by mass based on the total mass of wire) | Metal components in wire (percent by mass based on the total mass of wire) | | | | | | | | |
|---|---|---|---|---|---|---|---|---|---|---|---|
| | | C₈CO₃ | Nl | Mo | Fe | Si | Mn | W | Nb | Ti | Cr |
| Examples | 1 | 0 | 51.0 | 14.1 | 4.6 | 0 | 0.7 | 3.0 | 0 | 0.1 | 15.1 |
| | 2 | 0 | 51.1 | 14,0 | 4.6 | 0 | 0.6 | 3.1 | 0 | 0.1 | 15.2 |
| | 3 | 0 | 51.7 | 14,1 | 4.3 | 0 | 0.7 | 2.9 | 0 | 0.1 | 15.0 |
| | 4 | 0 | 51.7 | 14.0 | 4.6 | 0 | 0.6 | 3.1 | 0 | 0.1 | 15.1 |
| | 5 | 0 | 51.3 | 14,1 | 4.2 | 0 | 0.7 | 3.0 | 0 | 0.1 | 15.3 |
| | 6 | 0 | 50.7 | 14.2 | 4.6 | 0 | 0.7 | 3.1 | 0 | 0.1 | 15.1 |
| | 7 | 0 | 50.6 | 14.1 | 4.0 | 0 | 0.6 | 3.0 | 0 | 0.1 | 15.2 |
| | 8 | 0 | 49.4 | 14.3 | 4.6 | 0 | 0.7 | 3.1 | 0 | 0.1 | 15.1 |
| | 9 | 0 | 52.3 | 14.1 | 4.6 | 0 | 0.7 | 3.1 | 0 | 0.1 | 15.0 |
| | 10 | 0 | 53.6 | 7.4 | 3.3 | 0.1 | 0.5 | 0 | 3.3 | 0.2 | 20.4 |
| | 11 | 0.1 | 53.5 | 7.3 | 3.2 | 0.1 | 0.3 | 0 | 3.4 | 0.2 | 20.3 |
| | 12 | 0 | 53.3 | 7.4 | 3.3 | 0.1 | 0.4 | 0 | 3.3 | 0.2 | 20.4 |
| | 13 | 0 | 53.1 | 7.3 | 3.1 | 0.1 | 0.3 | 0 | 3.2 | 0.2 | 20.2 |
| | 14 | 0 | 53.5 | 7.4 | 3.3 | 0.1 | 0.3 | 0 | 3.3 | 0.2 | 20.5 |
| | 15 | 0 | 53.8 | 7.3 | 3.1 | 0.1 | 0.3 | 0 | 3.2 | 0.2 | 20.3 |
| Comparative Examples | 16 | 0 | 50.7 | 14.0 | 4.7 | 0 | 0.8 | 11 | 0 | 0.1 | 15.2 |
| | 17 | 0 | 50.5 | 14.1 | 4.7 | 0 | 0.6 | 3.1 | 0 | 0.1 | 15.3 |
| | 18 | 0.2 | 50.3 | 14.0 | 4.4 | 0 | 0.6 | 3.0 | 0 | 0.1 | 15.1 |
| | 19 | 0 | 51.1 | 14.0 | 4.5 | 0 | 0.7 | 11 | 0 | 0.1 | 15.1 |
| | 20 | 0.2 | 54.9 | 14.2 | 4.3 | 0 | 0.8 | 3.2 | 0 | 0.1 | 15.3 |
| | 21 | 0.2 | 45.6 | 13.5 | 4.5 | 0 | 0.7 | 3.1 | 0 | 0.1 | 14.0 |
| | 22 | 0.2 | 50.9 | 14.2 | 4.2 | 0 | 0.7 | 3,1 | 0 | 0.1 | 15.2 |
| | 23 | 0.2 | 47.2 | 14.3 | 4.5 | 0 | 0.7 | 3.1 | 0 | 0.1 | 15.0 |
| | 24 | 0.2 | 53.0 | 14.3 | 4.6 | 0 | 0.6 | 3.2 | 0 | 0.1 | 15.0 |
| | 25 | 0.2 | 49.8 | 14.3 | 4.6 | 0 | 0.6 | 3.1 | 0 | 0.1 | 14.9 |
| | 26 | 0 | 53.6 | 7.4 | 3.3 | 0.1 | 0.5 | 0 | 3.3 | 0.2 | 20.2 |
| | 27 | 0.1 | 51.2 | 7.5 | 3.3 | 0,1 | 0.4 | 0 | 3.3 | 0.2 | 20.4 |
| | 28 | 0.3 | 55.3 | 7.3 | 3.2 | 0.1 | 0.3 | 0 | 3.3 | 0.2 | 20.5 |
| | 29 | 0,3 | 54.7 | 7.3 | 3.2 | 0.1 | 0.3 | 0 | 3.3 | 0.2 | 20.5 |

Horizontal fillet welding was performed using each of the flux-cored wires 11 of Nos. 1 to 29 manufactured according to the above method. The arc stability and spatter suppression during the welding, and pitting resistance, bead appearance and slag removability of the weld bead were evaluated.

The horizontal fillet welding was performed using a SM490A steel sheet having a thickness of 12 mm, a width of 80 mm, and a length of 3 00 mm as a base metal. The welding was performed under conditions of a welding current of 200 A (direct current, wire positive), an arc voltage of 28 V, and a welding speed of 30 cm per minute, using a mixture of argon and 20% CO₂ as a shielding gas supplied at a flow rate of 25 liters per minute.

**TABLE 3**

| Base metal thickness mm | Base metal composition (percent by mass) | | | | | |
|---|---|---|---|---|---|---|
| | C | Si | Mn | P | S | Fe |
| 12 or 20 | 0.15 | 0.32 | 1.31 | 0.011 | 0.001 | remainder |

The welding operations using the flux-cored wires gave weld metals having compositions corresponding to the compositions of the total components of the weld metal shown in following Table 4. These compositions are in accordance with the compositions of sheath Types A to C in Table 1 and with the compositions of the wires Nos. 1 to 29 in Tables 2-1, 2-2, and 2-3. The total components of the weld metals were analyzed by sampling the weld bead as illustrated in Fig. 3 and analyzing the components thereof according to AWS A5.34.

The arc stability and spatter suppression during welding, and the pitting resistance, bead appearance and slag removability of the weldbeads respectively obtained from flux-cored wires according to the examples and comparative examples were evaluated, and the results are shown in Table 5 below. The arc stability and spatter suppression during welding, and the bead appearance and slag removability of the weld beads were respectively evaluated as "AA" when they were very good; evaluated as "BB" when they were good; evaluated as "CC" when they were somewhat poor; and evaluated as "DD" when they were poor. The pitting resistance was evaluated by the number of dyed spots detected through a dye penetrant inspection on the bead surface. In this inspection, end portions 50 mm from the toe and heel of the weld bead were excluded from portions to be evaluated. A sample having an average number of generated pits per 50 mm of the length of the bead of 0 was evaluated as "AA"; one having an average number of 1 to 10 was evaluated as "BB"; one having an average number of 11 to 30 was evaluated as "CC"; and one having an average number of 31 or more was evaluated as "DD".

Independently, restraint cracking tests were performed on the weld beads obtained according to the examples and comparative examples, to evaluate the resistance to hot cracking. In the restraint cracking tests, two SM490A steel sheets each having a thickness of 20 mm and being illustrated in Table 3 were used as base metals, and single bead welding was performed on the base metals with an automatic welder. The base metals had a width of 125 mm and a length of 300 mm, were arranged as facing in a distance of 2 mm, and had a slope down to one half of the thickness so as to have an included angle of 60° , as illustrated in Fig. 2. The welding was performed under the following conditions. When the sheath type A or C in Table 1 was used (Examples Nos. 1 to 9 and Comparative Examples Nos. 16 to 25), the welding was performed at a welding current of 240 A (direct current, wire positive); and, when the sheath type B in Table 1 was used (Examples Nos . 10 to 15 and Comparative Examples Nos. 26 to 29), the welding was performed at a welding current of 200 A (direct current, wire positive) . The welding was performed at an arc voltage of 30 V while supplying a mixture of argon and 20% CO₂ as the shielding gas at a flow rate of 25 liters per minute. The welding speed was set to 40 cm per minute. The lengths of cracks in the welding line direction were measured and totalized, and a cracking ratio with respect to the total bead length (the ratio of the total of lengths of cracks in the welding line direction to the total bead length) was determined and evaluated as the resistance to hot cracking. In the hot cracking tests (restraint cracking tests), end portions 20 mm from the toe and heel, respectively, of the weld bead were excluded from portions to be evaluated. A sample having a cracking ratio of 0% (no cracking) was evaluated as "AA" , one showing cracking but having a cracking ratio of less than 5% was evaluated as "BB", and one having a cracking ratio of 5% or more was evaluated as "DD". The resistance to hot cracking as evaluated on the respective flux-cored wires according to the examples and comparative examples are also shown in Table 5.

Separately, vertical upward welding of a fillet T joint was performed semi-automatically using two SM490A steel sheets each having a thickness of 12 mm, a width of 80 mm, and a length of 300 mm as base metals, and the weldability in this welding was evaluated. The welding was performed at a welding current of 150 A (direct current, wire positive) and an arc voltage of 26 V while supplying a mixture of argon and 20% CO₂ as the shielding gas at a flow rate of 25 liters per minute. The welding speed was set to 6 cmper minute. A sample showing very good weldability (no bead drooling (bead dripping) even at a welding current of 160 to 170 A) was evaluated as "AA", one showing good weldability was evaluated as "BB", one showing bead drooling was evaluated as "CC", and one failing to undergo weldingwas evaluated as "DD" . As a comprehensive evaluation, asampleevaluatedas "AA" in all the pitting resistance, arc stability, bead appearance and slag removability, weldability in vertical upward welding, spatter suppression, and resistance to hot cracking was evaluated as "AA" in comprehensive evaluation; one evaluated as "BB" in at least one of the above properties but evaluated as "AA" in the other properties was evaluated as "BB" in comprehensive evaluation; one evaluated as "DD" in at least one property was evaluated as "DD" in comprehensive evaluation; and one evaluated as "CC" in at least one properties but evaluated not as "DD" in the other properties was evaluated as "CC" in comprehensive evaluation. The comprehensive evaluations of the samples according to the examples and comparative examples are also shown in Table 5.

**TABLE 4**

| | Wire number | Chemical composition of weld metal (percent by mass) | | | | | | | | | | |
|---|---|---|---|---|---|---|---|---|---|---|---|---|
| | | C | Si | Mn | P | S | Ni | Cr | Mo | W | Nb | Fe |
| Examples | 1 | 0.016 | 0.17 | 0.65 | 0.007 | 0.003 | 57.5 | 15.3 | 15.9 | 3.5 | 0 | 5.3 |
| | 2 | 0.016 | 0.17 | 0.55 | 0.007 | 0.004 | 57.6 | 15.4 | 15.8 | 3.6 | 0 | 5.4 |
| | 3 | 0.013 | 0.18 | 0.65 | 0.008 | 0.003 | 58.2 | 15.2 | 15.9 | 3.4 | 0 | 5.0 |
| | 4 | 0.013 | 0.19 | 0.54 | 0.007 | 0.003 | 57.9 | 15.2 | 15.7 | 3,5 | 0 | 5.3 |
| | 5 | 0.015 | 0.17 | 0.65 | 0.008 | 0.004 | 57.8 | 15.5 | 15.9 | 3.5 | 0 | 4.9 |
| | 6 | 0.014 | 0.21 | 0.65 | 0.007 | 0.004 | 57.2 | 15.4 | 16.0 | 3.6 | 0 | 5.4 |
| | 7 | 0.014 | 0.23 | 0.55 | 0.007 | 0.003 | 57.7 | 15.6 | 16.1 | 3.5 | 0 | 4.7 |
| | 8 | 0.014 | 0.23 | 0.66 | 0.007 | 0.003 | 56.5 | 15.6 | 16.4 | 3.6 | 0 | 5.5 |
| | 9 | 0.015 | 0.23 | 0.64 | 0.008 | 0.003 | 58.1 | 15.0 | 15.7 | 3.5 | 0 | 5.3 |
| | 10 | 0.027 | 0.19 | 0.30 | 0.008 | 0.003 | 60.4 | 21.1 | 8.6 | 0 | 3.3 | 3.5 |
| | 11 | 0.026 | 0.18 | 0.34 | 0.008 | 0.003 | 60.6 | 21.2 | 8.3 | 0 | 3.9 | 3.3 |
| | 12 | 0.028 | 0.19 | 0.45 | 0.007 | 0.004 | 60.3 | 21.2 | 8.4 | 0 | 3.7 | 3.4 |
| | 13 | 0.028 | 0.20 | 0.34 | 0.007 | 0.003 | 60.7 | 21.2 | 8.3 | 0 | 3.7 | 3.3 |
| | 14 | 0.030 | 0.19 | 0.34 | 0.007 | 0.003 | 60.4 | 21.3 | 8,4 | 0 | 3.7 | 3.4 |
| | 15 | 0.029 | 0.18 | 0.34 | 0.007 | 0.003 | 60.9 | 21.2 | 8.3 | 0 | 3.6 | 3.2 |
| Comparative Examples | 16 | 0.015 | 0.31 | 0.73 | 0.007 | 0.004 | 57.2 | 15.4 | 15.8 | 3.6 | 0 | 5.5 |
| | 17 | 0.017 | 0.23 | 0.55 | 0.008 | 0.003 | 57.1 | 15.6 | 16.0 | 3.6 | 0 | 5.5 |
| | 18 | 0.016 | 0.25 | 0.56 | 0.007 | 0.003 | 57.4 | 15.5 | 16.0 | 3.5 | 0 | 5.2 |
| | 19 | 0.015 | 0.26 | 0.64 | 0.007 | 0.004 | 57.7 | 15.3 | 15.8 | 3.6 | 0 | 5.2 |
| | 20 | 0.018 | 0.23 | 0.70 | 0.008 | 0.004 | 59.1 | 14.8 | 15.3 | 3.6 | 0 | 4.8 |
| | 21 | 0.015 | 0.25 | 0.71 | 0.007 | 0.003 | 55.9 | 15.5 | 16.6 | 3.9 | 0 | 5.7 |
| | 22 | 0.016 | 0.29 | 0.64 | 0.007 | 0.004 | 57.5 | 15.5 | 16.1 | 3.6 | 0 | 4.9 |
| | 23 | 0.015 | 0.23 | 0.68 | 0.008 | 0.003 | 55.6 | 15.9 | 16.8 | 3.7 | 0 | 5.5 |
| | 24 | 0.017 | 0.26 | 0.53 | 0.008 | 0.004 | 58.3 | 14.9 | 15.7 | 3.6 | 0 | 5.2 |
| | 25 | 0.015 | 0.23 | 0.56 | 0.007 | 0.003 | 57.0 | 15.3 | 16,3 | 3.6 | 0 | 5.4 |
| | 26 | 0.029 | 0.17 | 0.30 | 0.008 | 0.004 | 60.5 | 21.0 | 8.6 | 0 | 3.4 | 3.5 |
| | 27 | 0.028 | 0.18 | 0.46 | 0.007 | 0.003 | 59.3 | 21.7 | 8.7 | 0 | 3.8 | 3.5 |
| | 28 | 0.030 | 0.30 | 0.33 | 0.008 | 0.004 | 61.3 | 20.9 | 8.1 | 0 | 3.7 | 3.3 |
| | 29 | 0.030 | 0.38 | 0.33 | 0.008 | 0.004 | 61.0 | 21.0 | 8.1 | 0 | 3.7 | 3.3 |

**TABLE 5**

| | Wire number | Evaluations | | | | | | Comprehensive evalution |
|---|---|---|---|---|---|---|---|---|
| | | Pitting resistance of bead surface | Arc stability | Bead appearance and slag removability | Weldability in vertical upward welding | Spatter suppression | Resistance to high- temperature cracking | |
| Examples | 1 | A | AA | AA | AA | AA | AA | AA |
| | 2 | AA | AA | AA | AA | AA | AA | AA |
| | 3 | AA | AA | AA | AA | AA | AA | AA |
| | 4 | AA | AA | BB | AA | AA | AA | BB |
| | 5 | BB | AA | BB | AA | AA | AA | BB |
| | 6 | AA | AA | AA | BB | M | BB | BB |
| | 7 | AA | AA | AA | BB | AA | BB | BB |
| | 8 | AA | AA | AA | BB | AA | BB | BB |
| | 9 | BB | AA | AA | AA | AA | BB | BB |
| | 10 | BB | AA | AA | AA | AA | BB | BB |
| | 11 | BB | AA | AA | AA | AA | BB | BB |
| | 12 | BB | AA | AA | BB | AA | BB | BB |
| | 13 | BB | AA | BB | BB | AA | BB | BB |
| | 14 | BB | AA | AA | AA | AA | BB | BB |
| | 15 | BB | AA | AA | BB | AA | BB | BB |
| Comparative Examples | 16 | AA | AA | CC | AA | AA | DD | DD |
| | 17 | CC | BB | CC | AA | AA | BB | CC |
| | 18 | AA | AA | AA | CC | BB | BB | CC |
| | 19 | CC | AA | BB | AA | AA | BB | CC |
| | 20 | AA | CC | CC | DD | AA | B8 | DD |
| | 21 | CC | AA | AA | AA | BB | BB | CC |
| | 22 | DD | AA | BB | AA | AA | DD | DD |
| | 23 | AA | BB | CC | CC | BB | BB | CC |
| | 24 | BB | AA | CC | DD | AA | BB | DD |
| | 25 | CC | AA | BB | AA | AA | BB | CC |
| | 26 | CC | CC | AA | AA | CC | BB | CC |
| | 27 | BB | BB | BB | BB | DD | BB | DD |
| | 28 | CC | AA | BB | AA | AA | DD | DD |
| | 29 | CC | AA | BB | AA | AA | DD | DD |

Table 5 demonstrates that Examples Nos. 1 to 15 satisfying the conditions as in the present invention showed excellent arc stability and spatter suppression during welding, showed satisfactory weldability in vertical upward welding, had good pitting resistance, bead appearance and slag removability of the weld bead, and showed satisfactory resistance to hot cracking. Comparative Example No. 16 had a SiO₂ content in the flux higher than the range specified in the present invention, thereby showed degraded bead appearance and slag removability, and had poor resistance to hot cracking. Comparative Example No. 17 had a SiO₂ content in the flux lower than the range specified in the present invention and showed degraded bead appearance and slag removability. This sample also had a ratio of the total of the TiO₂ and ZrO₂ contents to the SiO₂ content higher than the range specified in the present invention and thereby showed an increased number of pits generated in the weld bead.

Comparative Example No. 18 had a ZrO₂ content in the flux lower than the range specified in the present invention and thereby did not show sufficiently effectively improved weldability even though ZrO₂ was added. Comparative Example No. 19 had a ZrO₂ content in the flux and a ratio of the total of the TiO₂ and ZrO₂ contents to the SiO₂ content both higher than the ranges specified in the present invention and thereby showed degraded pitting resistance. Comparative Example No. 20 had a TiO₂ content in the flux lower than the range specified in the present invention, thereby showed degraded arc stability to cause poor weldability, and had degraded bead appearance and slag removability. Comparative Example No. 21 had a TiO₂ content in the flux higher than the range specified in the present invention and thereby showed degraded pitting resistance.

Comparative Example No. 22 had a manganese oxide content in the flux lower than the range specified in the present invention, thereby showed degraded pitting resistance, failed to prevent silicon from remaining in the weld metal, and showed degraded resistance to hot cracking. Comparative Example No. 23 had a manganese oxide content in the flux higher than the range specified in the present invention, thereby showed degraded slag removability, and showed degraded weldability in vertical upward welding due to a lowered minimum temperature of solidification of the molten slag. Comparative Example No. 24 had a ratio of the total of the TiO₂ and ZrO₂ contents to the SiO₂ content in the flux lower than the range specified in the present invention, and thereby showed degraded slag removability and weldability in vertical upward welding. Comparative Example No. 25 had a ratio of the total of the TiO₂ and ZrO₂ contents to the SiO₂ content in the flux higher than the range specified in the present invention, and thereby showed degraded pitting resistance.

Comparative Example No. 26 had a total content of sodium compounds, potassium compounds, and lithium compounds in the flux in terms of Na, K and Li, respectively, lower than the range specified in the present invention, thereby showed degraded arc stability to cause insufficient spatter suppression, and had degraded pitting resistance. Comparative Example No . 27 had a total contents of sodium compounds, potassium compounds, and lithium compounds in the flux in terms of Na, K and Li, respectively, higher than the range specified in the present invention and thereby showed an increased spatter generation. Comparative Examples No. 28 and No. 29 did not contain manganese oxide and thereby showed degraded pitting resistance and inferior resistance to hot cracking.

Of Examples Nos. 1 to 15 satisfying the conditions in the present invention, Examples Nos. 1 to 5 are examples having compositions of the sheath within the preferred range specified in the present invention and thereby showed resistance to hot cracking superior to that of Examples Nos. 6 to 15 having compositions of the sheath not falling within the preferred range.

## Claims

1. A flux-cored nickel-based alloy wire comprising:
a sheath composed of a nickel-based alloy; and
a flux filled in the sheath,
wherein the sheath contains nickel (Ni) in a content of 50.0 percent by mass or more,
wherein the flux contains, based on the total mass of the wire, TiO₂ in a content of 3 to 11 percent by mass; SiO₂ in a content of 0.2 to 1.3 percent by mass; ZrO₂ in a content of 1 to 3 percent by mass; one or more manganese oxides in a content in terms of MnO₂ of 0.3 to 1.0 percent by mass; and one or more compounds selected from the group consisting of sodium (Na) compounds, potassium (K) compounds, and (Li) lithium compounds in a total content in terms of Na, K, and Li, respectively, of 0.2 to 1.0 percent by mass, and
wherein the flux has a ratio of the total of the TiO₂ and ZrO₂ contents to the SiO₂ content (([TiO₂] + [ZrO₂])/[SiO₂]) of 7.0 to 14.5, where [TiO₂], [SiO₂] and [ZrO₂] represent the TiO₂, SiO₂ and ZrO₂ contents, respectively.

2. The flux-cored nickel-based alloy wire according to Claim 1,
wherein the sheath has controlled contents of carbon (C), silicon (Si), manganese (Mn), phosphorus (P), sulfur (S), copper (Cu), vanadium (V) and cobalt (Co) so as to have, based on the total mass of the sheath, a C content of 0.02 percent by mass or less, a Si content of 0.08 percent by mass or less, a Mn content of 1.0 percent by mass or less, a P content of 0.04 percent by mass or less, a S content of 0.03 percent by mass or less, a Cu content of 0.50 percent by mass or less, a V content of 0.35 percent by mass or less, and a Co content of 2.5 percent by mass or less, and
wherein the sheath contains, based on the total mass of the sheath, chromium (Cr) in a content of 14.5 to 16.5 percent by mass, molybdenum (Mo) in a content of 15.0 to 17.0 percent by mass, iron (Fe) in a content of 4.0 to 7.0 percent by mass, and tungsten (W) in a content of 3.0 to 4.5 percent by mass.

3. The flux-cored nickel-based alloy wire according to Claim 1 or 2,
wherein the sheath occupies 70 to 80 percent by mass of the total mass of the wire.

## Patentansprüche

1. Flußkern-Legierungsdraht auf Nickel-Basis, umfassend:
eine Hülle, aufgebaut aus einer Legierung auf Nickel-Basis, und
ein Flußmittel, gefüllt in die Hülle,
wobei die Hülle Nickel (Ni) in einem Anteil von 50 Masse-Prozent oder mehr enthält,
wobei das Flußmittel, basierend auf der Gesamtmasse des Drahtes, TiO₂ in einem Anteil von 3 bis 11 Masse-Prozent, SiO₂ in einem Anteil von 0,2 bis 1,3 Masse-Prozent, ZrO₂ in einem Anteil von 1 bis 3 Masse-Prozent, ein oder mehrere Manganoxide in einem Anteil, bezogen auf MnO₂, von 0,3 bis 1,0 Masse-Prozent, und ein oder mehrere Verbindungen, ausgewählt aus der Gruppe, bestehend aus Natrium (Na) Verbindungen, Kalium (K) Verbindungen und (Li) Lithiumverbindungen in einem Gesamtanteil, bezogen auf Na, K bzw. Li, von 0,2 bis 1,0 Masse-Prozent enthält und
wobei das Flußmittel ein Verhältnis bezüglich der Gesamtmenge der TiO₂ und ZrO₂ Anteile zu dem SiO₂-Anteil (([TiO₂] + [ZrO₂])/[SiO₂]) von 7,0 bis 14,5 aufweist, wobei [TiO₂], [SiO₂] bzw. [ZrO₂] TiO₂, SiO₂ bzw. ZrO₂ Anteile darstellen.

2. Flußkern-Legierungsdraht auf Nickel-Basis gemäß Anspruch 1, wobei die Hülle kontrollierte Anteile an Kohlenstoff (C), Silicium (Si), Mangan (Mn), Phosphor (P), Schwefel (S), Kupfer (Cu), Vanadium (V) und Kobalt (Co) aufweist, so daß, bezogen auf die Gesamtmasse der Hülle, ein C-Anteil von 0,02 Masse-Prozent oder weniger, ein Si-Anteil von 0,08 Masse-Prozent oder weniger, ein Mn-Anteil von 1,0 Prozent oder weniger, ein P-Anteil von 0,04 Masse-Prozent oder weniger, ein S-Anteil von 0,03 Masse-Prozent oder weniger, ein Kupfer-Anteil von 0,50 Masse-Prozent oder weniger, ein V-Anteil von 0,35 Masse-Prozent oder weniger und ein Co-Anteil von 2,5 Masse-Prozent oder weniger vorliegt und wobei die Hülle, bezogen auf die Gesamtmasse der Hülle, Chrom (Cr) in einem Anteil von 14,5 bis 16,5 Masse-Prozent, Molybdän (Mo) in einem Anteil von 15,0 bis 17,0 Masse-Prozent, Eisen (Fe) in einem Anteil von 4,0 bis 7,0 Masse-Prozent und Wolfram (W) in einem Anteil von 3,0 bis 4,5 Masse-Prozent enthält.

3. Flußkern-Legierungsdraht auf Nickel-Basis gemäß Anspruch 1 oder 2, wobei die Hülle 70 bis 80 Masse-Prozent der Gesamtmasse des Drahtes besetzt.

## Revendications

1. Fil d'alliage à base de nickel à flux fourré comprenant :
une gaine composée d'alliage à base de nickel ; et
un flux fourré dans la gaine,
dans lequel la gaine contient du nickel (Ni) avec une teneur supérieure ou égale à 50,0 pour-cent en masse,
dans lequel le flux contient, sur la base de la masse totale du fil, du TiO₂ avec une teneur de 3 à 11 pour-cent en masse ; du SiO₂ avec une teneur de 0,2 à 1,3 pour-cent en masse ; du ZrO₂ avec une teneur de 1 à 3 pour-cent en masse ; un ou plusieurs oxydes de manganèse avec une teneur, en termes de MnO₂, de 0,3 à 1,0 pour-cent en masse ; et un ou plusieurs composés sélectionnés dans le groupe constitué par des composés de sodium (Na), des composés de potassium (K) et des composés de lithium (Li) avec une teneur totale respectivement en termes de Na, K et Li, de 0,2 à 1,0 pour-cent en masse, et
dans lequel le flux présente un rapport du total des teneurs en TiO₂ et ZrO₂ sur la teneur en SiO₂ (([TiO₂] + [ZrO_{2]})/[SiO₂]) de 7,0 à 14,5, dans lequel [TiO₂], [SiO₂] et [ZrO₂] représentent respectivement les teneurs en TiO₂, SiO₂ et ZrO₂.

2. Fil d'alliage à base de nickel à flux fourré selon la revendication 1,
dans lequel la gaine présente des teneurs contrôlées en carbone (C), en silicium (Si), en manganèse (Mn), en phosphore (P), en soufre (S), en cuivre (Cu), en vanadium (V) et en cobalt (Co) de manière à obtenir, sur la base de la masse totale de la gaine, une teneur en C inférieure ou égale à 0,02 pour-cent en masse, une teneur en Si inférieure ou égale à 0,08 pour-cent en masse, une teneur en Mn inférieure ou égale à 1,0 pour-cent en masse, une teneur en P inférieure ou égale à 0,04 pour-cent en masse, une teneur en S inférieure ou égale à 0,03 pour-cent en masse, une teneur en Cu inférieure ou égale à 0,50 pour-cent en masse, une teneur en V inférieure ou égale à 0,35 pour-cent en masse et une teneur en Co inférieure ou égale à 2,5 pour-cent en masse, et
dans lequel la gaine contient, sur la base de la masse totale de la gaine, du chrome (Cr) avec une teneur de 14,5 à 16,5 pour-cent en masse, du molybdène (Mo) avec une teneur de 15,0 à 17,0 pour-cent en masse, du fer (Fe) avec une teneur de 4,0 à 7,0 pour-cent en masse, et du tungstène (W) avec une teneur de 3,0 à 4,5 pour-cent en masse.

3. Fil d'alliage à base de nickel à flux fourré selon la revendication 1 ou 2, dans lequel la gaine représente de 70 à 80 pour-cent en masse de la masse totale du fil.
